# EUROPEAN PATENT SPECIFICATION

(11) **EP 2 155 970 B1**
(45) Date of publication and mention of the grant of the patent: **26.10.2016**
(21) Application number: 08737271.0
(22) Date of filing: 16.05.2008
(51) Int. Cl.: E02B 7/26, E03F 7/02, E02B 8/04, E02B 7/28, F16K 3/02, E03F 5/10

(54) **SLUICE GATE**
SCHLEUSENTOR
VANNE DE VIDANGE

(30) Priority: 18.05.2007 GB 0709544
(43) Date of publication of application: 24.02.2010
(73) Proprietor: Yorkshire Water Services Limited, Yorkshire BD6 2SZ (GB)
(72) Inventor: SMITH, Michael Robert, Bradford Yorkshire BD6 2LZ (GB); GRUBB, Andrew, Bradford Yorkshire BD6 2LZ (GB); MITCHELL, Mark Alan, Bradford Yorkshire BD6 2LZ (GB); JEFFRIES, Mark Hudson, Bradford Yorkshire BD6 2LZ (GB); LAYCOCK-SMITH, Nigel Lee, Bradford Yorkshire BD6 2LZ (GB)
(74) Representative: Appleyard Lees IP LLP
(86) International application number: PCT/GB2008/050355
(87) International publication number: WO 2008/142443

(56) References cited:
- WO-A-01/34919
- CA-A1- 1 225 384
- FR-A- 532 138
- JP-A- 2003 206 523
- US-A1- 2006 131 534

## Description

### BACKGROUND

### Technical Field

The present invention relates to a sluice gate according to the preamble of claim 1.

### Description of Related Art

Traditionally, a sluice is a water channel controlled by a sluice gate. A typical sluice gate comprises a wooden or metal plate which slides in a frame to open or close the water channel. Sluices and sluice gates have many uses. Most commonly, sluices and sluice gates are used to control water levels and flow rates in rivers and canals, in waste water treatment plants and to recover minerals in mining operations. Sluice gates are also known as slide gates and penstocks.

A penstock is a type of sluice gate typically used in sewerage systems to control a flow of wastewater, typically including debris, through a sewer, drain or culvert.

Known penstocks typically comprise a frame and a moveable gate captured within the frame. The frame has a pair of opposed vertical channels in which the gate is arranged to slide up and down, and normally has horizontal upper and lower frame members which limit the vertical movement of the gate. In a lower-most position a lower edge of the gate seals against the water channel or the lower frame member to prevent liquid flow through the penstock. In a raised position wastewater is able to flow under the gate and through the penstock. Typically, a mechanism is provided to move the gate within the frame. A known mechanism comprises a threaded screw which cooperates with a threaded bore in the sluice or upper frame member and which is attached to the gate. The gate is moved up or down depending on the direction of rotation of the threaded screw.

A penstock is often used in an overflow chamber of a sewerage system. The overflow chamber allows excess liquid such as storm water to escape into, for example, a river. The penstock is provided to increase flow rate through the overflow chamber in storm water conditions. In this way, a level at which excess fluid is diverted into the overflow is controllable.

In one known sewerage overflow system, the penstock is set at a predetermined open or raised position so that when an unusually excessive amount of wastewater arrives at the penstock, for example during a storm, some of the wastewater builds up in the overflow chamber due to the restriction to flow caused by the penstock. Eventually, the wastewater overflows into an overflow pipe at a predetermined height, relieving the sewerage system downstream from the excessive amounts of wastewater caused by the storm. Once the storm has passed, the level of wastewater in the overflow chamber drops to normal levels.

In some systems, a modified penstock is provided in which the gate defines an aperture. The aperture is substantially circular and allows flow through the penstock when the gate is in a lowered position. In other words, the penstock is never fully closed to wastewater flow and can be kept in a fully-lowered position during storm conditions.

In both cases illustrated, the penstock gate is raised or lowered to control flow. In addition, the gate is raised periodically or when required to dislodge blockages caused be debris in the wastewater. In some cases, any blockages pass through the penstock to travel further downstream in the sewerage system. In other cases, the debris attaches to the penstock itself and can be difficult to dislodge. Also, debris is often trapped by the penstock when the gate is closed, further disrupting flow control.

In particular, known penstocks tend to collect debris in a number of locations including the lower edge of the gate, the aperture in the gate and the drive mechanism (i.e. the threaded screw). This collected debris has a number of disadvantageous effects, including a reduction in liquid flow rate through the penstock. The reduced flow capacity through the penstock causes sewage to be diverted into the overflow pipe unnecessarily, thus unduly contaminating a river or the like into which the overflowing sewage runs. Further, collected debris causes the movement of the penstock gate to become inhibited, which ultimately leads to blockages, loss of service and undue overflow. Thus, the penstock must be regularly maintained and cleaned, which is time consuming and costly. In addition, collected debris often damages an operating mechanism of the penstock, requiring frequent replacement.

### SUMMARY OF THE INVENTION

It is an aim of the present invention to provide a penstock which reduces the above problems. For example, an aim is to provide a penstock which collects less debris, thus improving reliability and accuracy, and reducing maintenance requirements.

According to the present invention there is provided a sluice gate, sewer and method as set forth in the appended claims. Other features of the invention will be apparent from the dependent claims, and the description which follows.

### SUMMARY OF THE INVENTION

It is an aim of the present invention to provide a penstock which reduces the above problems. For example, an aim is to provide a penstock which collects less debris, thus improving reliability and accuracy, and reducing maintenance requirements.

According to the present invention there is provided a sluice gate and a channel comprising a sluice gate, as set forth in the appended claims. Other features of the invention will be apparent from the dependent claims, and the description which follows.

According to a first aspect of the present invention, there is provided a sluice gate for use in a sewer, the sluice gate comprises a gate for controlling liquid flow through the sluice gate, and the gate comprises a lower gate member and an upper gate member, wherein the lower gate member and the upper gate member are moveable relative to one another, and the upper gate member is movable within the sluice gate from a fully-raised position in which a maximum liquid flow is permitted through the gate to a fully-lowered position in which a predetermined liquid flow is permitted through the gate. The sluice gate is characterised in that the lower and upper gate members each comprise an upper and lower edge respectively for contacting against the opposing edge of the other gate member and wherein the upper edge of the lower gate member is arranged to have a profile matching that of a sewer or culvert in use.

In this way, the sluice gate is less likely to trap debris. This is especially true when the gate is moved from an open position to a closed position, because the gate no longer seals against a floor of the sluice or a bottom frame member. Instead, the gate is suitably divided into at least two gate members. This in effect moves the sealing point of the gate to a higher position reducing a likelihood of debris settling at the sealing point and becoming trapped.

Preferably, the pre-determined liquid flow is a minimum liquid flow greater than zero. In this way the sluice gate does not fully cut-off liquid flow even when the upper gate member is in the fully-lowered position.

Preferably, in the fully-lowered position, an aperture is formed which allows the predetermined liquid flow through the sluice gate. The aperture is, preferably, formed between the upper gate member and the lower gate member. In this way, good overflow control may be achieved while further reducing the chance of debris becoming trapped. This is because, unlike in the prior art, there is a reduced pinching action at the point through which wastewater or liquid flows. As a result, debris contained in the water is less likely to be pinched by the gate as it closes.

Preferably, an edge of at least one of the gate members comprises a cut-out which allows the predetermined liquid flow through the sluice gate. Preferably, the cut-out is arranged at a central region of the gate. The central region may be horizontally central within the edge of the gate.

Preferably, the upper and lower gate members each comprise edges arranged to contact one another, such that liquid flow is controlled between the respective gate edges. Preferably, at least a portion of the respective gate edges are arranged to contact each other in the fully-lowered position. Preferably, only a portion of the respective edges contact against one-another and liquid flows through the remaining portion in the fully-lowered position. The cut-out which allows the pre-determined liquid flow may be arranged within the edge of the upper gate member, the lower gate member, or both.

In an exemplary embodiment, the shape of the outer regions of the lower gate member has an upward angle. The upward angle may match a shape of benching adjacent to a channel.

In this way, fluid flow through the sluice gate is made more laminar and debris will pass through the sluice gate with less chance of being pinched or otherwise trapped. Also, the shape of the outer regions causes debris which attaches to the outer regions to slide toward a central region of the lower gate member. At the central region the debris is more likely to pass through the sluice gate without forming a blockage, and is less likely to be pinched or otherwise trapped when the gate is closed.

Preferably a frame forms an outer periphery of the penstock. Preferably, the frame comprises a lower portion and sides at edges of the lower portion. Preferably, the lower portion is horizontal. Preferably, the sides are vertical side members. The side members may comprise inward opposing channels in which the gate is moveable. An upper region of the frame may comprise downwardly sloping shoulders for allowing debris to fall off the penstock. Preferably a central horizontal portion is provided between the shoulders. A gate control mechanism may engage with the central portion.

A gate control mechanism may be provided for controlling a position and movement of the gate. The gate control mechanism may be controllable by a user. A tool may be required to adjust the gate control mechanism. The gate control mechanism may comprise means for lifting and supporting the gate. The gate control mechanism may lift an upper gate member. The gate control mechanism may comprise a threaded mechanism to control lifting of the gate.

One or more flexible sealing elements may be provided to prevent debris entering the penstock. In particular, the sealing element(s) may be provided to prevent debris entering the gate control mechanism. The flexible sealing element(s) may be arranged to seal a channel in which the gate is moveably arranged. Further, a sealing element may be arranged to contact against one or more faces of the gate. The one or more faces of the gate may be a front or rear face. The sealing element may be any suitable material, such a neoprene, plastic or the like.

According to another aspect of the present invention, there is provided a sluice gate comprising first and second gate portions moveably arranged for controlling liquid flow therebetween, the first gate portion having a predetermined upper profile corresponding to that of a sewer.

As discussed above, the sluice gate which comprises an orifice in the gate is used to control the pass forward flows of the sewer or culvert. The sluice gate is normally operated in the closed position and is raised for maintenance or removal of a blockage.

The orifice opening is set at a predetermined size/diameter so that when excess liquid flow arrives at the penstock over and above the predetermined pass forward flows, for example during a storm, excess liquid builds up at the penstock and is caused to overflow into an overflow pipe.

According to another aspect of the invention, there is provided a method of controlling liquid flow through a sluice gate, the method comprising moving an upper gate member relative to a lower gate member from a fully-raised position in which a maximum liquid flow is permitted to a fully-lowered position in which a predetermined liquid flow is permitted.

Additionally, the preferred features of the sluice gate are applicable to the method where appropriate.

### BRIEF DESCRIPTION OF THE DRAWINGS

For a better understanding of the invention, and to show how embodiments of the same may be carried into effect, reference will now be made, by way of example, to the accompanying diagrammatic drawings in which:
Figure 1 is a perspective front view of an embodiment of a penstock according to the present invention;
Figure 2 is a perspective horizontal view of the penstock embodiment; and
Figure 3 is a perspective rear view of the penstock embodiment.

### DETAILED DESCRIPTION OF THE EXEMPLARY EMBODIMENTS

Parts shown in the Figures are not indicated with reference numerals in all Figures for clarity.

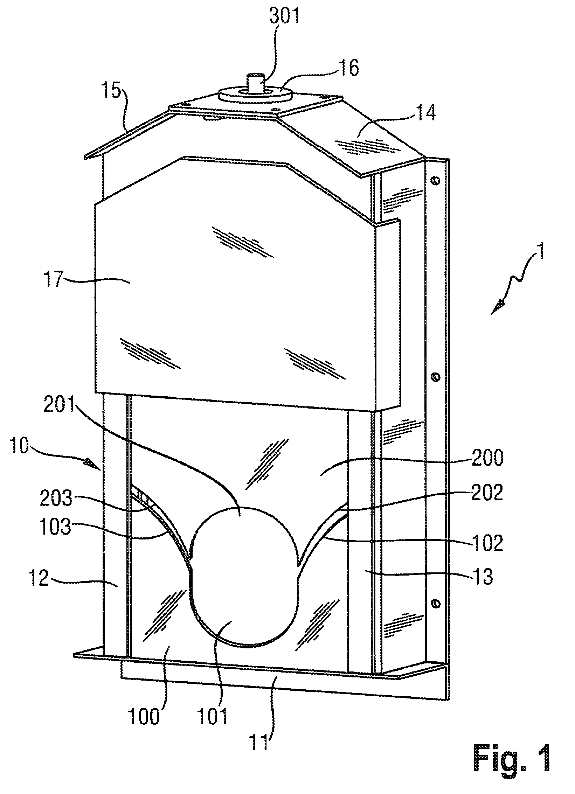

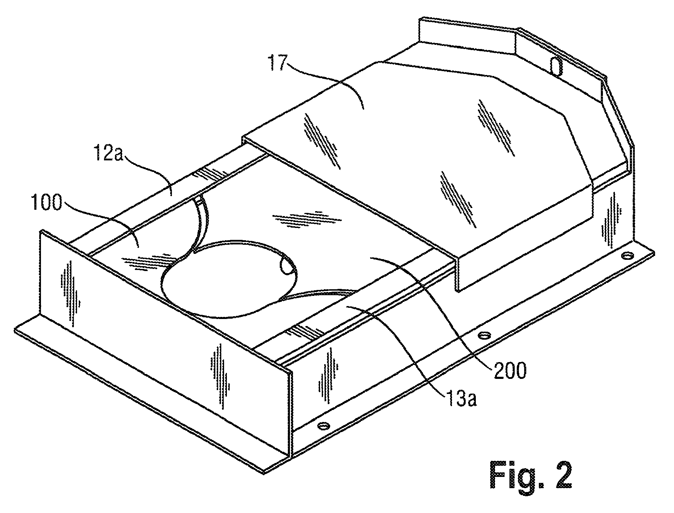

Referring to Figures 1 to 3, the penstock, generally 1, comprises a frame 10 defining an outer periphery of the penstock 1. The frame 10 is formed of a lower horizontal member 11 and two vertically oriented members 12, 13 at sides of the frame 10. Each of the lower 11 and vertical members 12, 13 has an L-shaped outer profile to aid mounting of the penstock 1, particularly within the confined walls of a manhole on the sewer, culvert or ancillaries. The L-shaped members may comprise one or more mounting holes there-through to allow the penstock 1 to be secured within the culvert.

An upper region of the frame 10 is formed by a pair of upwardly and inwardly inclined shoulders 14, 15 supporting a horizontal upper member 16 at a central region there-between. The upper member 16 comprises a threaded aperture through which a threaded rod 301 of a gate control mechanism 300 runs, as will be explained.

A forward face of the penstock 1 is formed by the vertical frame members 12, 13 and a planar or plate-like cover member 17 mounted there-between at an upper region of the frame 10. The cover member 17 is provided to enclose the gate control mechanism 300 to prevent ingress of liquid and/or debris, as will be explained.

Liquid flow through the penstock 1 is controlled by the relative position of a gate. In the preferred embodiment, the gate is formed by two planar, or plate-like, gate members 100, 200 mounted between the vertical members 12, 13.

The first, lower, gate member 100 is statically mounted at a lower region of the frame 10 between the vertical members 12, 13 and affixed to the lower horizontal member 11 to seal against liquid passage there-between.

The lower gate member 100 has a rectangular lower outer profile and a curved upper profile. At a horizontally central position, the lower gate member 100 has therein a generally semi-circular cut-out 101, this forming an orifice opening 101. The cut-out 101 is arranged to have a predetermined size for controlling a pass forward flows, which matches that of the channel and benching within the manhole chamber on the sewer or culvert into which the penstock is to be installed. The orifice hole 101 may have a predetermined size which is smaller than the incoming sewer or culvert and the channel within the manhole tapers down to the orifice opening, to reduce a pass on flow. That is, when the penstock is mounted within the manhole on the sewer or culvert, the lower cut-out 101 preferably has the same profile as an invert and channel of the sewer or culvert through which liquid flows. A lower point of the cut-out 101 is arranged to correspond to the bottom of the sewer or culvert.

Advantageously, the configuration of the cut-out 101 to have a profile corresponding to that of a culvert allows the penstock to cause minimal disruption to liquid flow through the culvert.

At either side of the cut-out 101, the lower gate 100 comprises upper sides 102, 103 which incline upwardly and outwardly from the cut-out 101. Each side has a convex curve which is predetermined to match the invert and benching of the manhole at either side within the sewer or culvert. The term benching is understood to be the inclined sides provided at either side of a culvert to encourage liquid to flow within the sewer or culvert. Advantageously, the configuration of the sides 101, 102 of the lower gate 100 to match the benching assists in minimising disruption to liquid flowing through the penstock 1, thereby minimising the amount of debris collected by the penstock 1.

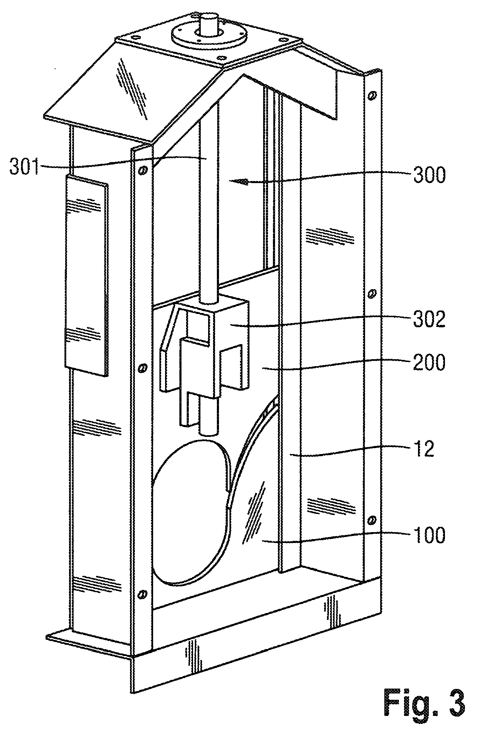

An upper gate member 200 is vertically moveable within opposed channels formed in inwardly facing sides of the vertical frame members 12, 13. The upper gate member 200 has a rectangular upper profile as shown in Figure 3. A lower profile of the upper gate member 200 has a corresponding shape to that of the lower gate member 100.

The lower profile of the upper gate member 200 comprises a horizontally central semi-circular cut-out 201. The cut-out 201 is arranged to form a circular aperture when the upper and lower gate members 100, 200 are brought into contact by vertically lowering the upper gate member 200. The lower profile of the upper gate member 200 comprises upwardly and outwardly inclined side portions 202, 203 having a convex curvature to match and fit against those of the lower gate member 102, 103. When the upper 200 and lower 100 gate members are brought into contact, the sides 102, 103, 202, 203 closely fit together to prevent liquid flow there-between.

The upper gate member 200 is moveably arranged in vertically oriented channels at inward sides of the vertical frame members 12, 13. The channels are formed by the forward faces of the frame members having an inward L-shape which forms a rear of each channel. A front of each channel is formed by further L-shaped members 12a, 13a which are coextensive with each vertical member 12, 13 to form a U-shaped channel for approximately half of the frame 10 height, and form the front face of the penstock. The L- shaped channel members 12a, 13a form the front face of the penstock with the cover member 17.

A gate mechanism 300 is arranged to control vertical movement of the upper gate member 200 and to retain or hold the upper gate member in a vertical position once set by a user. The gate mechanism, generally 300, is formed by a threaded aperture in the upper horizontal frame member 16 through which is rotatably arranged a vertically oriented threaded rod 301. A rear region of the upper frame member comprises a carrier 302 through which a lower end of the threaded rod rotates. Rotation of the threaded rod 301 causes upward or downward movement of the upper gate member 200, as will be appreciated by the skilled person. The penstock is to be operated in a position with the gate lowered in which a predetermined liquid flow is permitted and only raised for maintenance or removal of a blockage.

When the gate members 100, 200 are brought into contact by downward movement of the upper gate member 200, such that the side portions 102, 103, 202, 203 of each contact, a generally circular aperture is formed therein by the cut-outs 101, 201. A predetermined volume of liquid flow through the aperture formed by the cut-outs 101, 201 is therefore maintained, even with the upper gate member 200 contacting the lower gate member 100. Thus liquid flow through the penstock 1 is not eliminated. Advantageously, this prevents the penstock cutting off flow through the sewer, which would entirely divert flow into the overflow. Instead, a predetermined minimum liquid flow through the penstock 1 is maintained. However, in the case of excess flow through the sewer, the penstock causes excess flow to divert to the overflow once the liquid flow equals the cross section of the aperture formed in the gate member 100, 200.

With the upper gate member 200 in a raised position, liquid flow through the penstock 1 can be controlled to provide a maximum flow before liquid is diverted to the overflow. Raising of the upper gate member 200 enables the release of any debris or blockage forming in the channel/invert of the sewer or culvert in front of the orifice opening 101.

The penstock with the orifice control is used to control the pass forward flows of the sewer or culvert. In these situations, a penstock is used to control a level at which excess fluid is diverted to the overflow.

A further advantage of the preferred embodiment is that, in the case of excessive flow through the sewer when a liquid level at an upstream side of the penstock 1 reaches an upper region of the frame member, the downwardly inclined frame shoulders 14, 15 reduce the collection of debris upon the frame 10.

In order to further reduce the collection of debris and to increase the reliability of the penstock 1, a plurality of flexible sealing elements (not shown) are provided to enclose the gate control mechanism 300 and prevent liquid ingress carrying suspended debris. A sealing element is provided along a lower lip of the cover member 17 arranged to inwardly face and contact against the upper gate member 200. This sealing member prevents liquid flow between the front face of the upper gate member 200 and the cover member 17. In addition, sealing members are provided in the U-shaped channels within which the upper gate member 200 travels. The flexible sealing elements are preferably made from neoprene to provide a reliable and durable seal.

An embodiment of the present invention provides a penstock 1 which accurately controls a liquid flow. The liquid flow is prevented from being cut-off, which may cause the flow to be diverted to an overflow, thus contaminating the overflow with sewage in waste water applications. The penstock 1 minimises disruption of the liquid flow in normal use and a collection of debris, thus improving reliability of the penstock 1 and reducing a level of maintenance required.

Although a few preferred embodiments have been shown and described, it will be appreciated by those skilled in the art that various changes and modifications might be made without departing from the scope of the invention, as defined in the appended claims.

## Claims

1. A sluice gate (1) for use in a sewer, the sluice gate (1) comprising:
a gate for controlling liquid flow through the sluice gate (1),
wherein the gate comprises a lower gate member (100) and an upper gate member (200), the lower gate member (100) and the upper gate member (200) being moveable relative to one another, and the upper gate member (200) being movable within the sluice gate (1) from a fully-raised position in which a maximum liquid flow is permitted through the gate to a fully-lowered position in which a predetermined liquid flow is permitted through the gate;
**characterised in that**:
the lower and upper gate members (100,200) each comprise an upper and lower edge respectively for contacting against the opposing edge of the other gate member; and
wherein the upper edge of the lower gate member (100) is suitable to have a profile matching that of the sewer when installed.

2. The sluice gate of claim 1, wherein the upper gate member (200) comprises a lower edge shaped to set the predetermined liquid flow.

3. The sluice gate of claim 2, wherein the lower edge comprises a cut-out (201) to set the predetermined liquid flow.

4. The sluice gate of claim 1, wherein the respective upper and lower edges each comprise a cut-out (101,201), such that an aperture is formed to set the predetermined liquid flow when the upper gate member (200) is in the fully-lowered position.

5. The sluice gate of claim 4, wherein the cut-outs (101,201) are arranged centrally within the lower and upper gate members (100,200).

6. The sluice gate of any preceding claim, wherein the upper edge of the lower gate member (100) comprises upwardly angled side portions (102).

7. The sluice gate of claim 6, wherein a cut-out (101) is arranged between the side portions.

8. The sluice gate of claim 6 or 7, wherein the side portions are suitable to have a profile matching that of sewer when installed.

9. A channel comprising a sluice gate (1) according to any preceding claim 1-8, in which the gate is moveably arranged and comprises at least one flexible seal for sealing the channel.

10. The sluice gate of any preceding claim comprising a frame (10), wherein an upper region of the frame (10) comprises sloping shoulders (14,15).

11. The sluice gate of any preceding claim, comprising:
a cover (17) arranged at an upper region of a frame (10) of the sluice gate (1) for forming a face of the sluice gate (1).

12. The sluice gate of claim 11, comprising a dive mechanism (300) wherein the cover (17) is arranged to prevent debris entering the drive mechanism (300).

13. A sewer comprising the sluice gate (1) of any preceding claim 1-8, 10-12.

## Patentansprüche

1. Absperrschieber (1) für die Verwendung in einer Abwasserleitung, wobei der Absperrschieber (1) Folgendes umfasst:
einen Schieber zum Steuern einer Flüssigkeitsströmung durch den Absperrschieber (1),
wobei der Schieber ein unteres Schieberelement (100) und ein oberes Schieberelement (200) aufweist, wobei das untere Schieberelement (100) und das obere Schieberelement (200) relativ zueinander beweglich sind und wobei das obere Schieberelement (200) innerhalb des Absperrschiebers (1) aus einer vollständig angehobenen Position, in der eine maximale Flüssigkeitsströmung durch den Schieber zugelassen wird, in eine vollständig abgesenkte Position, in der eine vorgegebene Flüssigkeitsströmung durch den Schieber zugelassen wird, beweglich ist;
**dadurch gekennzeichnet, dass**:
das untere und das obere Schieberelement (100, 200) eine obere bzw. eine untere Kante aufweisen, um mit der jeweils gegenüberliegenden Kante des anderen Schieberelements in Kontakt zu gelangen; und
wobei die obere Kante des unteren Schieberelements (100) ein Profil haben kann, das im installierten Zustand an jenes der Abwasserleitung angepasst ist.

2. Absperrschieber nach Anspruch 1, wobei das obere Schieberelement (200) eine untere Kante aufweist, die so geformt ist, dass eine vorgegebene Flüssigkeitsströmung eingestellt wird.

3. Absperrschieber nach Anspruch 2, wobei die untere Kante einen Ausschnitt (201) aufweist, um die vorgegebene Flüssigkeitsströmung einzustellen.

4. Absperrschieber nach Anspruch 1, wobei die obere bzw. untere Kante jeweils einen Ausschnitt (101, 201) aufweisen, derart, dass eine Öffnung gebildet wird, um die vorgegebene Flüssigkeitsströmung einzustellen, wenn das obere Schieberelement (200) in der vollständig abgesenkten Position ist.

5. Absperrschieber nach Anspruch 4, wobei die Ausschnitte (101, 201) in dem unteren und in dem oberen Schieberelement (100, 200) mittig angeordnet sind.

6. Absperrschieber nach einem vorhergehenden Anspruch, wobei die obere Kante des unteren Schieberelements (100) nach oben angewinkelte Seitenabschnitte (102) aufweist.

7. Absperrschieber nach Anspruch 6, wobei zwischen den Seitenabschnitten ein Ausschnitt (101) angeordnet ist.

8. Absperrschieber nach Anspruch 6 oder 7, wobei die Seitenabschnitte ein Profil haben können, das im installierten Zustand an jenes der Abwasserleitung angepasst ist.

9. Kanal, der einen Absperrschieber (1) nach einem vorhergehenden Anspruch 1-8 umfasst, wobei der Schieber beweglich angeordnet ist und wenigstens eine flexible Dichtung aufweist, um den Kanal abzudichten.

10. Absperrschieber nach einem vorhergehenden Anspruch, der einen Rahmen (10) umfasst, wobei ein oberer Bereich des Rahmens (10) geneigte Schultern (14, 15) aufweist.

11. Absperrschieber nach einem vorhergehenden Anspruch, der Folgendes umfasst:
eine Abdeckung (17), die in einem oberen Bereich eines Rahmens (10) des Absperrschiebers (1) angeordnet ist, um eine Fläche des Absperrschiebers (1) zu bilden.

12. Absperrschieber nach Anspruch 11, der einen Tauchmechanismus (300) umfasst, wobei die Abdeckung (17) dafür ausgelegt ist, zu verhindern, dass Abfälle in den Tauchmechanismus (300) eindringen.

13. Abwasserleitung, die den Absperrschieber (1) nach einem der Ansprüche 1-8 und 10-12 umfasst.

## Revendications

1. Vanne (1) destinée à être utilisée dans un égout, la vanne (1) comprenant :
une porte servant à réguler l'écoulement de liquide à travers la vanne (1),
la porte comprenant un élément de porte inférieur (100) et un élément de porte supérieur (200), l'élément de porte inférieur (100) et l'élément de porte supérieur (200) étant mobiles l'un par rapport à l'autre, et l'élément de porte supérieur (200) étant mobile à l'intérieur de la vanne (1) d'une position entièrement relevée, dans laquelle un écoulement de liquide maximal est permis à travers la porte, à une position entièrement abaissée, dans laquelle un écoulement de liquide prédéterminé est permis à travers la porte ;
**caractérisée en ce que** :
les éléments de porte inférieur et supérieur (100, 200) comprennent chacun respectivement un bord supérieur et un bord inférieur destinés à venir en contact avec le bord opposé de l'autre élément de porte ; et
le bord supérieur de l'élément de porte inférieur (100) est approprié pour présenter un profil correspondant à celui de l'égout une fois l'installation faite.

2. Vanne selon la revendication 1, dans laquelle l'élément de porte supérieur (200) comprend un bord inférieur façonné de manière à définir l'écoulement de liquide prédéterminé.

3. Vanne selon la revendication 2, dans laquelle le bord inférieur comprend une échancrure (201) afin de définir l'écoulement de liquide prédéterminé.

4. Vanne selon la revendication 1, dans laquelle les bords supérieur et inférieur respectifs comprennent chacun une échancrure (101, 201), de telle sorte qu'une ouverture soit formée afin de définir l'écoulement de liquide prédéterminé lorsque l'élément de porte supérieur (200) se trouve dans la position entièrement abaissée.

5. Vanne selon la revendication 4, dans laquelle les échancrures (101, 201) sont disposées centralement dans les éléments de porte inférieur et supérieur (100, 200).

6. Vanne selon l'une quelconque des revendications précédentes, dans laquelle le bord supérieur de l'élément de porte inférieur (100) comprend des parties latérales (102) inclinées vers le haut.

7. Vanne selon la revendication 6, dans laquelle une échancrure (101) est disposée entre les parties latérales.

8. Vanne selon la revendication 6 ou 7, dans laquelle les parties latérales sont appropriées pour présenter un profil correspondant à celui de l'égout une fois l'installation faite.

9. Canal comprenant une vanne (1) selon l'une quelconque des revendications précédentes 1 à 8, dans laquelle la porte est disposée de manière mobile et comprend au moins un élément d'étanchéité souple destiné à assurer l'étanchéité du canal.

10. Vanne selon l'une quelconque des revendications précédentes comprenant un châssis (10), dans laquelle une région supérieure du châssis (10) comprend des épaulements obliques (14, 15).

11. Vanne selon l'une quelconque des revendications précédentes, comprenant :
un capot (17) disposé au niveau d'une région supérieure d'un châssis (10) de la vanne (1) de façon à former une face de la vanne (1).

12. Vanne selon la revendication 11, comprenant un mécanisme d'entraînement (300), dans laquelle le capot (17) est disposé de manière à empêcher des débris de pénétrer dans le mécanisme d'entraînement (300).

13. Égout comprenant la vanne (1) selon l'une quelconque des revendications précédentes 1 à 8, 10 à 12.
